# NEW EUROPEAN PATENT SPECIFICATION

(11) **EP 2 792 584 B2**
(45) Date of publication and mention of the opposition decision: **30.04.2025**
(45) Mention of the grant of the patent: 10.01.2018
(21) Application number: 14161229.1
(22) Date of filing: 24.03.2014
(51) Int. Cl.: B62J 6/02, B60Q 1/04, F21S 8/10

(54) **Headlight system for use in vehicle that leans into turns, vehicle that leans into turns, and a method for controlling a headlight system**
Scheinwerfereinheit zur Verwendung in einem Fahrzeug, das sich in Kurven lehnt, und Verfahren zur Steuerung eines Scheinwerfersystems
Système de phare pour utilisation dans un véhicule qui penche dans les virages, véhicule qui penche dans les virages et procédé de commande d'un système de phare

(30) Priority: 17.04.2013 JP 2013086299
(43) Date of publication of application: 22.10.2014
(73) Proprietor: Yamaha Hatsudoki Kabushiki Kaisha, Iwata-shi, Shizuoka 438-8501 (JP)
(72) Inventor: Kosugi, Makoto, Iwata-shi, Shizuoka 438-8501 (JP); Ikeda, Takeshi, Iwata-shi, Shizuoka 438-8501 (JP); Kino, Yasuhiko, Iwata-shi, Shizuoka 438-8501 (JP); Inoue, Takehiro, Iwata-shi, Shizuoka 438-8501 (JP); Ooba, Junichi, Iwata-shi, Shizuoka 438-8501 (JP)
(74) Representative: Grünecker Patent- und Rechtsanwälte PartG mbB

(56) References cited:
- EP-A1- 1 645 466
- EP-A1- 2 407 345
- EP-A1- 2 489 549
- EP-A2- 2 657 080
- WO-A1-2010/061651
- DE-U1- 202012 004 965
- JP-A- 2008 001 305
- US-A1- 2005 099 818
- US-A1- 2005 270 785
- US-A1- 2008 225 535
- US-B2- 7 674 022

## Description

The present invention relates to a headlight system for use in a vehicle that leans into turns according to the preamble of independent claim 1, and a vehicle that leans into turns. Such a headlight system for use in a vehicle that leans into turns can be taken from the prior art document JP-2008-001 305-A, which is considered as the closest prior art.

In general, in a vehicle that leans into turns (such as saddle-ride type vehicles including motorcycles, three-wheeled motor vehicles, snowmobiles, and ATVs (all terrain vehicles)), when the vehicle corners or turns at an intersection, a rider operates a handlebar and additionally shifts his/her own weight in order to counteract centrifugal force acting on a vehicle body. As a result, the vehicle turns with an attitude (hereinafter, also referred to as "lean attitude") leaning to the inner side of a curve. On the other hand, in a vehicle that does not lean into turns, for example, in an automobile, when the vehicle corners or turns at an intersection, a driver operates a steering wheel and turns with centrifugal force acting on a vehicle body. Therefore, in the vehicle that does not lean into turns, the vehicle body leans to the outer side of a curve due to the centrifugal force.

In the vehicle that leans into turns, the turning is made with an active use of the weight shifting of the rider himself/herself. Therefore, the vehicle body leans to a high degree. In the vehicle that does not lean into turns, the vehicle body leans to the outer side of the curve due to the centrifugal force. The degree of this leaning varies depending on the running speed of the vehicle and the magnitude (radius) of the curve, and this leaning of the vehicle body is not utilized for the turning. In the vehicle that does not lean into turns, it is preferable that the amount of leaning to the outer side of the curve due to the centrifugal force is small.

Thus, at a time of cornering or turning at an intersection, the vehicle that leans into turns causes the vehicle body to lean to the inner side of the curve with a relatively large amount of leaning, while the vehicle that does not lean into turns causes the vehicle body to lean to the outer side of the curve with a relatively small amount of leaning.

Normally, a vehicle is provided with a plurality of lights irrespective of whether or not the vehicle leans into turns. The lights include a light intended mainly to ensure a field of view of a rider of the vehicle and a light intended mainly to enable a surrounding vehicle or the like to recognize the presence of the own vehicle. A headlight is the light intended mainly to ensure the field of view of the rider of the vehicle, and in general, is configured to switch between a high beam (running headlight) and a low beam (passing headlight).

The high beam, which emits light in a horizontal (upward) direction, ensures a field of view at a long distance. Generally, in order to avoid dazzling a rider of a surrounding vehicle or the like, the high beam is used in a situation where there is no vehicle or the like existing ahead at night. The low beam, which emits light in a downward direction, is used even in a situation where there is a vehicle or the like existing ahead. Therefore, in a normal case, a vehicle often runs with the low beam turned on.

When the vehicle that leans into turns is running on a straight road, an illumination range of a headlight light source (low beam) spreads evenly to the right and left in an area ahead in an advancing direction and below a horizontal plane including the headlight light source. When the vehicle that leans into turns is running on a road curving to the left, the vehicle runs with the vehicle body inclined to the left. Accordingly, the illumination range of the headlight light source spreads downward to the left. As a result, a nearer position on a running lane is illuminated. Thus, the illumination range in an area inside the curve and ahead in the advancing direction decreases.

Therefore, a vehicle (motorcycle) including a plurality of auxiliary light sources has been proposed. The auxiliary light source is configured to be turned on in addition to a main headlight light source at a time when the vehicle is inclined (for example, see JP 2010-149836 A). A vehicle disclosed in JP 2010-149836 A as an example includes a headlight light source, a second auxiliary light source, and a third auxiliary light source. The second auxiliary light source and the third auxiliary light source are arranged at the outer side of the headlight light source with respect to a width direction of the vehicle. The second auxiliary light source and the third auxiliary light source are configured to be turned on when the vehicle has a lean angle (inclination angle) of a predetermined value or more. Turning on the auxiliary light sources, which are different from the main headlight light source, enlarges an illumination range. As a result, a farther position at the inner side of the curve is illuminated, as compared with illumination made by the main headlight light source alone.

The vehicle disclosed in JP 2010-149836 A controls the state of turning-on of the plurality of light sources in accordance with the lean angle, to change an illumination range. That is, the vehicle changes the illumination range without moving an optical system in accordance with the lean angle. Therefore, a lighting member does not require any movable component for changing the illumination range in accordance with the lean angle. This results in a headlight system having a high durability. The vehicle disclosed in JP 2010-149836 A is configured such that, in addition to the headlight light source having been already turned on, the auxiliary light sources which are different from the headlight light source are also turned on. This can provide a wider illumination range.

However, the vehicle disclosed in JP 2010-149836 A has a fixed-and-additive-type headlight system in which the auxiliary light sources are provided in addition to the main headlight light source. Therefore, the volume of the entire headlight system is increased. Moreover, an increase in the number of light sources installed results in an increase in the number of wirings because each of the plurality of light sources needs to be individually turned on and turned off. Furthermore, it is necessary that any of the plurality of light sources produces an amount of light that can brightly illuminate a road surface. For this purpose, each of wirings that supply a current to the plurality of light sources needs to have a sufficient thickness relative to the current rating. A control device for independently controlling turning-on of each of the plurality of light sources is also required. Thus, providing the auxiliary light source in addition to the main headlight results in an increase in the volume of an entire light system because of the addition of the auxiliary light source itself, and moreover results in a further increase in the volume of the entire light system because of the necessity for arranging many thick wirings and providing the control device.

The present invention is accomplished in view of the problems described above. An object of the present invention is to provide a headlight system and a vehicle that leans into turns, that achieve downsizing of the entire system while retaining a high durability and a wide illumination range obtainable by a fixed-and-additive-type sub headlight.

According to the present invention said object is solved by a headlight system for use in a vehicle that leans into turns having the features of independent claim 1 and a vehicle that leans into turns according to claim 9. Preferred embodiments are laid down in the dependent claims.

There are provided the following configurations, wherein the features of (1) in combination with the additional features of (7) form the invention as defined by claim 1.
(1) A headlight system for use in a vehicle that leans into turns,
   the headlight system including:
   a main headlight configured to be turned on irrespective of inclination of the vehicle and illuminate an area ahead;
   a sub headlight including a plurality of light sources and a lamp body that supports the light sources, the plurality of light sources being configured to be turned on when the vehicle is inclined; and
   a control device supported on the lamp body, the control device being configured to, when the vehicle is inclined to the right with respect to a width direction of the vehicle, turn on among the plurality of light sources a light source that illuminates an area ahead and to the right of the vehicle with respect to the width direction of the vehicle, and when the vehicle is inclined to the left with respect to the width direction of the vehicle, turn on among the plurality of light sources a light source that illuminates an area ahead and to the left of the vehicle with respect to the width direction of the vehicle.
   In a fixed-and-additive-type headlight system which includes a sub headlight in addition to a main headlight, installing one part of a plurality of light sources included in the sub headlight to a lamp body and using them as a light source for illuminating an area ahead and to the right of the vehicle while installing the other part of the plurality of light sources to the lamp body and using them as a light source for illuminating an area ahead and to the left of the vehicle results in generation of a space around a region where the light sources are installed. In the configuration of (1), the control device is supported on the lamp body, and thus the control device is integrated with the sub headlight. Therefore, the created space can be effectively used for arrangement of the control device. This allows downsizing of the entire system. Additionally, the integration of the control device with the sub headlight can shorten the length of wirings, the number of which is increased due to adoption of the plurality of light sources in the sub headlight. That is, a space for installation of the wirings can also be reduced. Accordingly, the integration of the control device with the sub headlight achieves downsizing of the entire system. The configuration of (1) achieves downsizing of the entire system while retaining a high durability and a wide illumination range obtainable by a fixed-and-additive-type headlight system which includes a sub headlight in addition to a main headlight.
(2) The headlight system according to (1), wherein the sub headlight includes a sub headlight illumination part that radiates light beams emitted from the plurality of light sources toward an area ahead and to the right of the vehicle and an area ahead and to the left of the vehicle with respect to the width direction of the vehicle,
   the control device is arranged between a right end and a left end of the sub headlight illumination part with respect to a right-left direction in a front elevational view of the vehicle as viewed from the front side thereof under a state where the headlight system is mounted to the vehicle in an upright state. The configuration of (2) allows, in a fixed-and-additive-type headlight system including a sub headlight in addition to a main headlight, the control device to be arranged with effective use of a space that is created between the right and left ends of the sub headlight illumination part that radiates the light beams emitted from the plurality of light sources toward an area ahead and to the right of the vehicle and an area ahead and to the left of the vehicle. In this case, wirings each extending from the control device to each of the plurality of light sources can be arranged in an efficient manner. Therefore, a space for installation of the wirings can also be reduced. Accordingly, further downsizing of the entire system is achieved with retaining of a high durability and a wide illumination range that are obtainable by a fixed-and-additive-type headlight system including a sub headlight in addition to a main headlight.
(3) The headlight system according to (2), wherein the control device is arranged between a lower end and an upper end of the sub headlight illumination part with respect to the vertical direction in the front elevational view.
   The configuration of (3) allows, in a fixed-and-additive-type headlight system including a sub headlight in addition to a main headlight, the control device to be arranged with effective use of a space that is created between the lower and upper ends of the sub headlight illumination part that radiates the light beams emitted from the plurality of light sources toward an area ahead and to the right of the vehicle and an area ahead and to the left of the vehicle. In this case, wirings each extending from the control device to each of the plurality of light sources can be arranged in an efficient manner with respect to the vertical direction, too. Therefore, a space for installation of the wirings can also be reduced. Accordingly, further downsizing of the entire system is achieved with retaining of a high durability and a wide illumination range that are obtainable by a fixed-and-additive-type headlight system including a sub headlight in addition to a main headlight.
(4) The headlight system according to (3), wherein the control device is arranged on a vertical line that passes through the center of a region between the right and left ends of the sub headlight illumination part with respect to the right-left direction in the front elevational view.
   The configuration of (4) allows the control device to be arranged with effective use of a space in a fixed-and-additive-type system. The space is created in a central area of a region between sections of the sub headlight illumination part with respect to the right-left direction. The sections are consist of a section that radiates a light beam to an area ahead and to the right of the vehicle and a section that radiates a light beam to an area ahead and to the left of the vehicle. In this case, wirings each extending from the control device to each of the plurality of light sources can be arranged in a more efficient manner with respect to the right-left direction. Accordingly, further downsizing of the entire system is achieved with retaining of a high durability and a wide illumination range that are obtainable by a fixed-and-additive-type headlight system including a sub headlight in addition to a main headlight.
(5) The headlight system according to (4), wherein each of the plurality of light sources included in the sub headlight is comprised of an LED,
   the headlight system includes a driver circuit that is supported on the lamp body, the driver circuit being configured to supply a current to the LED in accordance with a control performed by the control device. An LED (Light Emitting Diode), which is a semiconductor device, has a higher durability than, for example, a light bulb. Here, the configuration of (5) allows the driver circuit for the LEDs to be arranged with use of a space created in the sub headlight, too. Consequently, the entire system is downsized with retaining of a high durability and a wide illumination range that are obtainable by a fixed-and-additive-type headlight system provided with a sub headlight including an LED in addition to a main headlight. Moreover, the length of a wiring that supplies a current for turning on the LED can be shortened. This can reduce noise emission to the outside, which may otherwise be caused by a current supplied from the driver circuit to each of the plurality of LEDs.
(6) The headlight system according to (5), wherein a driver circuit configured to supply a current to the LED in accordance with a control performed by the control device is provided integrally with the control device.
   In the configuration of (6), the driver circuit is provided integrally with the control device. As a result, wirings corresponding to the plurality of LEDs, which are arranged between the control device and the driver circuit, are shortened. Accordingly, the entire system can be further downsized with retaining of a high durability and a wide illumination range that are obtainable by providing of the sub headlight in addition to the main headlight.
(7) The headlight system according to (6), wherein the control device includes a receiver that receives data in a format for digital data transmission, the data being used for a control of turning-on of the plurality of light sources of the sub headlight.
   For determination of whether or not to turn on the plurality of light sources of the sub headlight, for example, data outputted from a plurality of sensors is used. In an example case, outputs from these sensors are directly inputted to the control device. In such a configuration, wirings extending from the sensors are all connected to the control device. Thus, the number of input ports of the control device is increased. This results in restriction on the position where the control device can be arranged.
   The configuration of (7) enables the control device to receive data, which is to be used for determination of whether or not to turn on the plurality of light sources, in a format for digital data transmission. Therefore, in the configuration of (7), for example, an external device which is different from the control device and mounted in a vehicle part other than the headlight system is able to receive and process outputs made from a plurality of sensors, convert the outputs into the format for digital data transmission, and transmit the resultant to the control device. In such a case, the control device is able to receive digital data from the external device via a single reception port. Thus, the control device need not have an input port that directly receives an output from the sensor. As a result, the degree of freedom in arrangement of the control device is increased, thus allowing more effective use of a space existing in the sub headlight. Accordingly, the configuration of (7) achieves further downsizing of the entire system while retaining a high durability and a wide illumination range obtainable by the sub headlight.
(8) The headlight system according to any one of (1) to (7), wherein
   the control device is arranged inside a housing that serves as an exterior of the lamp body of the sub headlight.
   In a fixed-and-additive-type headlight system which includes a sub headlight in addition to a main headlight, installing one part of a plurality of light sources included in the sub headlight to a lamp body and using them as a light source for illuminating an area ahead and to the right of the vehicle while installing another part of the plurality of light sources to the lamp body and using them as a light source for illuminating an area ahead and to the left of the vehicle results in generation of a space around a region where the light sources are installed. In the headlight system of (8), effective use of a space created inside the housing can downsize the entire system while retaining a high durability and a wide illumination range obtainable by a fixed-and-additive-type headlight system, and additionally can use the housing for the protection of both the control device and the interior of the sub headlight.
(9) The headlight system according to any one of (1) to (7), wherein
   the control device is arranged outside a housing that serves as an exterior of the lamp body of the sub headlight.
   In a fixed-and-additive-type headlight system which includes a sub headlight in addition to a main headlight, installing one part of a plurality of light sources included in the sub headlight to a lamp body and using them as a light source for illuminating an area ahead and to the right of the vehicle while installing another part of the plurality of light sources to the lamp body and using them as a light source for illuminating an area ahead and to the left of the vehicle results in generation of a space around a region where the light sources are installed. In the headlight system of (9), effective use of a space created outside the housing can enhance maintainability of the control device while retaining a high durability and a wide illumination range obtainable by a fixed-and-additive-type headlight system.
(10) A vehicle that leans into turns,
   the vehicle including the headlight system according to any one of (1) to (9).

The configuration of (10) achieves downsizing of the entire headlight system while retaining a high durability and a wide illumination range obtainable by the headlight system including the sub headlight in addition to the main headlight.

### [EFFECTS OF THE INVENTION]

The present invention is able to provide a headlight system and a vehicle that achieve downsizing of an entire system while retaining a high durability and a wide illumination range obtainable by the sub headlight.

These and other objects, features, aspects and advantages of the present invention will become apparent to those skilled in the art from the following detailed description, which, taken in conjunction with the accompanying drawings, discloses some embodiments.

### [BRIEF DESCRIPTION OF THE DRAWINGS]

[FIG. 1] A front elevational view schematically showing a motorcycle according to a first embodiment.
[FIG. 2] A partial cross-sectional view showing the structure of a front part of a vehicle body of the motorcycle shown in FIG. 1.
[FIG. 3] A front cross-sectional view showing an outline configuration of a headlight unit shown in FIGS. 1 and 2.
[FIG. 4] A side cross-sectional view showing an outline configuration of the headlight unit.
[FIG. 5] A diagram schematically showing illumination ranges and cut-off lines produced by light sources included in the headlight unit shown in FIG. 3.
[FIG. 6] A block diagram showing a basic electrical configuration concerning the headlight unit of the motorcycle.
[FIG. 7] A front cross-sectional view showing an outline configuration of a headlight unit according to a second embodiment.
[FIG. 8] A side cross-sectional view showing an outline configuration of the headlight unit according to the second embodiment.

### [EMBODIMENTS FOR CARRYING OUT THE INVENTION]

Firstly, a description will be given to studies that the present inventors have carried out on a headlight system including a plurality of light sources configured to be turned on when a vehicle is inclined.

A light distribution is set for each of the plurality of light sources that are configured to be turned on when a vehicle is inclined. The light distribution corresponds to a shared part of an illumination range associated with each light source. In a vehicle that leans into turns, normally, arrangement of component parts follows such a shape that a central portion of a front end part (front part) of a vehicle body with respect to a width direction of the vehicle protrudes frontward while side portions located at the right and left sides of the central portion extend obliquely rearward. Accordingly, the plurality of light sources included in the headlight system are also arranged so as to follow the shape of the front end portion of the vehicle body and so as to correspond to sharing of right and left illumination ranges. It is necessary that each of the plurality of light sources is arranged so as not to interrupt the illumination range produced by the neighboring light source. The volume of an entire fixed-and-additive-type headlight system is increased because sub headlights are provided. In consideration of the light distributions set for the plurality of light sources and the arrangements of the plurality of light sources, it is difficult to reduce the size of the entire headlight system in a simple homothetic manner or to simply shorten the spacing between light sources.

Furthermore, in the fixed-and-additive-type headlight system, auxiliary light sources are provided in addition to a main headlight light source, and thus the number of light sources is increased. Therefore, a control device for individually turning on and off each of the light sources is required. Wirings for connecting the control device to each of the light sources are also required. Each of the wirings needs to have a large diameter such that it can supply a current that enables the light source to brightly illuminate a road surface. Consequently, the fixed-and-additive-type headlight system has an increased volume as a whole because of addition of the auxiliary light sources, and moreover, may have a further volume increase because the wirings having a large diameter are arranged and the control device is provided.

The present inventors have found out that an unused gap or space occurs around the sub headlights due to the light distribution setting for the plurality of light sources and the arrangement of the plurality of light sources which have been the problem. The space occurring around the sub headlights can be used to arrange the control device integrally with the sub headlights. Arranging the control device integrally with the sub headlights can shorten the length of the large-diameter wiring that extends from the control device to each light source. In sum, in the fixed-and-additive-type headlight system, the volume is increased due to the auxiliary light sources, and the volume may be further increased due to the control device. However, arranging the control device integrally with the sub headlights by utilizing the space produced due to the light source arrangement that is specific to the fixed-and-additive type headlight system can suppress a volume increase due to the presence of the control device itself and additionally can shorten the length of the large-diameter wiring that extends from the control device to each of the plurality of light sources. As a result, the entire volume can be downsized. Accordingly, the entire system can be downsized while a high durability and a wide illumination range obtainable by providing of the sub headlights in addition to the main headlight are retained.

### <First Embodiment>

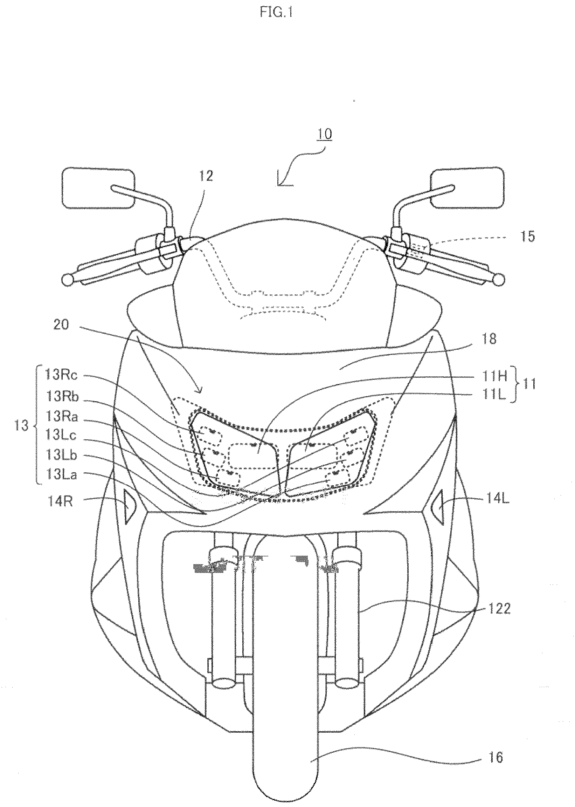

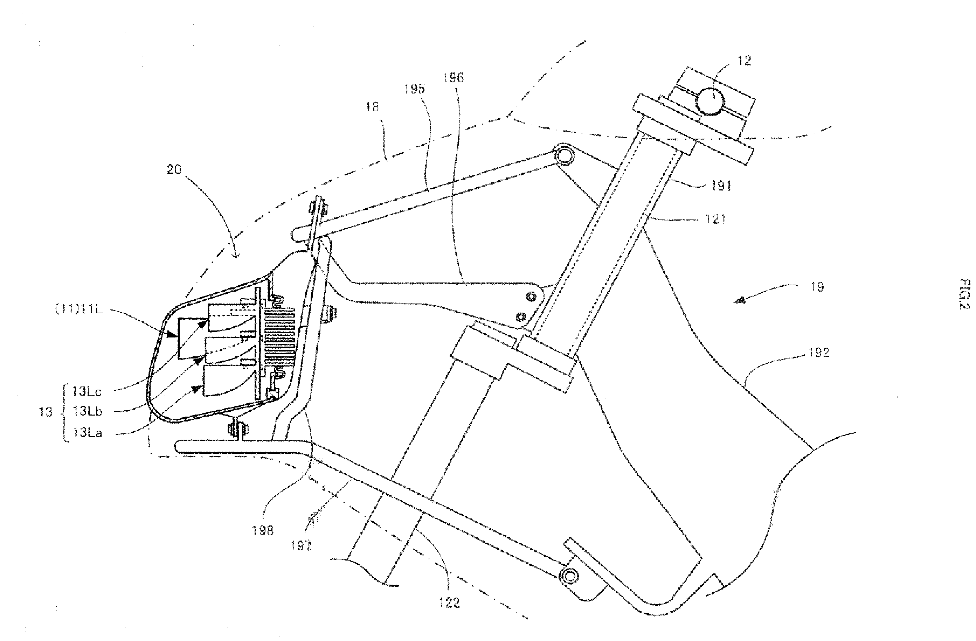

FIG. 1 is a front elevational view schematically showing a motorcycle according to a first embodiment. FIG. 2 is a partial cross-sectional view showing the structure of a front part of a vehicle body of the motorcycle 10 shown in FIG. 1.

The motorcycle 10 is an example of a vehicle that leans into turns according to the present teaching. In the present teaching, no particular limitation is put on the vehicle that leans into turns. For example, saddle-ride type vehicles including motorcycles, three-wheeled motor vehicles, snowmobiles, and ATVs (all terrain vehicles) may be mentioned. In the following description, the terms "front" and "back" are terms with respect to an advancing direction of the vehicle, the terms "up" and "down" are terms with respect to the vertical direction of the vehicle, and the terms "right" and "left" are, unless otherwise stated, terms with respect to a rider.

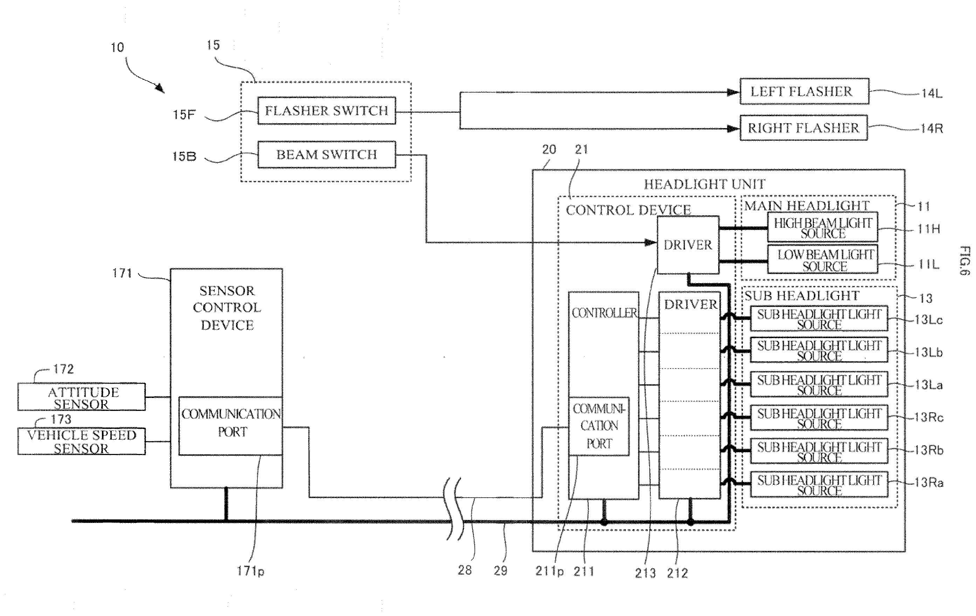

The motorcycle 10 includes a handlebar 12. An operation switch 15 is provided in a left portion of the handlebar 12 with respect to a width direction of the vehicle. The operation switch 15 includes a beam switch 15B and a flasher switch 15F (see FIG. 6). A steering shaft 121 is fixed to a center portion of the handlebar 12 with respect to the width direction of the vehicle. The steering shaft 121 extends downward through a head pipe 191. A front fork 122 is provided at the lower end of the steering shaft 121. A front wheel 16 is rotatably supported at the lower end of the front fork 122.

A front cover 18 covers a front part of the head pipe 191 having the steering shaft 121 passing therethrough. A headlight unit 20 is provided in a central portion of a front surface of the front cover 18 with respect to the width direction of the vehicle. The headlight unit 20 is an example of a headlight system according to the present teaching. The headlight unit 20 includes a main headlight 11 and a sub headlight 13.

The main headlight 11, which is turned on irrespective of inclination of the motorcycle 10, illuminates an area ahead of the motorcycle 10. The main headlight 11 includes a high beam light source 11H (running headlight) and a low beam light source 11L (passing headlight). The high beam light source 11H illuminates an area ahead in front of the motorcycle 10 at a height equal to or above a horizontal plane of the main headlight 11. The low beam light source 11L illuminates an area ahead in front of the motorcycle 10 at a height below the horizontal plane of the main headlight 11. The high beam light source 11H and the low beam light source 11L are configured such that only one of them is turned on at one time. Turning-on of the high beam light source 11H and the low beam light source 11L is switched by the rider operating the beam switch 15B (see FIG. 6).

The sub headlight 13 is a headlight configured to be turned on when the motorcycle 10 is inclined, and in other words, when the motorcycle 10 has a lean attitude. The sub headlight 13 is a headlight configured to be turned on in addition to the main headlight 11. The sub headlight 13 includes sub headlight light sources 13La, 13Lb, 13Lc, 13Ra, 13Rb, and 13Rc. The sub headlight light sources 13La to 13Lc illuminate an area ahead and to the left of the motorcycle 10 with respect to the width direction of the vehicle. The sub headlight light sources 13Ra to 13Rc illuminate an area ahead and to the right of the motorcycle 10 with respect to the width direction of the vehicle. Thus, the sub headlight 13 includes a plurality of sub headlight light sources 13La to 13Lc that illuminate an area ahead and to the left of the motorcycle 10 with respect to the width direction of the vehicle, and a plurality of sub headlight light sources 13Ra to 13Rc that illuminate an area ahead and to the right of the motorcycle 10 with respect to the width direction of the vehicle. The sub headlight light sources 13La to 13Lc and the sub headlight light sources 13Ra to 13Rc are arranged at opposite sides with respect to the width direction of the vehicle. The sub headlight light sources 13La, 13Lb, and 13Lc are arranged in this order from the center toward the upper left with respect to the width direction of the vehicle. Illumination ranges produced by the sub headlight light sources 13La to 13Lc are located in order from the center toward the upper left with respect to the width direction of the vehicle, and overlap one another. The sub headlight light sources 13Ra to 13Rc are arranged in this order from the center toward the upper right with respect to the width direction of the vehicle. Illumination ranges produced by the sub headlight light sources 13Ra to 13Rc are located in order from the center toward the upper right with respect to the width direction of the vehicle, and overlap one another. The sub headlight light sources 13La to 13Lc, 13Ra to 13Rc are an example of a plurality of light sources according to the present teaching.

Flashers 14L and 14R, serving as direction indicators, are provided at both sides of the motorcycle 10 with respect to the width direction of the vehicle. The flashers 14L and 14R are configured such that either one of them flashes at one time. Flashing/turning-off of the flashers 14L and 14R is switched by the rider operating the flasher switch 15F (see FIG. 6).

The plurality of sub headlight light sources 13La, 13Lb, and 13Lc, which are located in a left part of the motorcycle 10, are arranged between the main headlight 11 and the flasher 14L with respect to the width direction of the vehicle. The plurality of sub headlight light sources 13Ra, 13Rb, and 13Rc, which are located in a right part of the motorcycle 10, are arranged between the main headlight 11 and the flasher 14R with respect to the width direction of the vehicle. In the present teaching, no particular limitation is put on the positional relationship between the sub headlight light source and the flasher with respect to the width direction of the vehicle. In a possible example, the sub headlight light source may be arranged at the outer side of the flasher with respect to the width direction of the vehicle.

FIG. 2 shows a part of a main frame 192 and the head pipe 191. The main frame 192 constitutes a vehicle body frame of the motorcycle 10. The main frame 192 extends obliquely rearward from the head pipe 191 having the steering shaft 121 passing therethrough. The head pipe 191 supports an upper frame 195 and a support arm 196. The upper frame 195 and the support arm 196 extend frontward from the head pipe 191. A front end portion of the support arm 196 is fixed to a front end portion of the upper frame 195. The main frame 192 supports a lower frame 197. The lower frame 197 extends frontward from the main frame 192. The lower frame 197 and the upper frame 195 are coupled to each other by a coupling arm 198. The upper frame 195, the support arm 196, the lower frame 197, the coupling arm 198, the main frame 192, and the head pipe 191, which are fixed to one another, constitute a vehicle body 19 of the motorcycle 10. The front cover 18 also constitutes the vehicle body 19 of the motorcycle 10. The headlight unit 20 is supported on the vehicle body 19 of the motorcycle 10. In more detail, the headlight unit 20 is fixed to the upper frame 195, the lower frame 197, and the coupling arm 198 of the vehicle body 19. Here, in the present teaching, no particular limitation is put on the structure of the vehicle body and the structure that supports the headlight unit 20, and any conventional known configuration is adoptable.

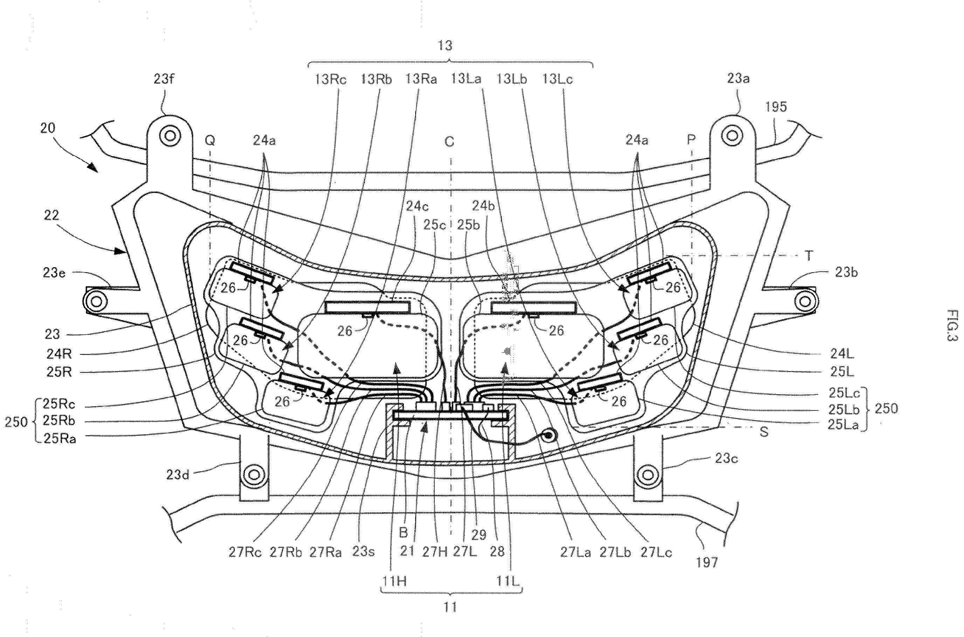

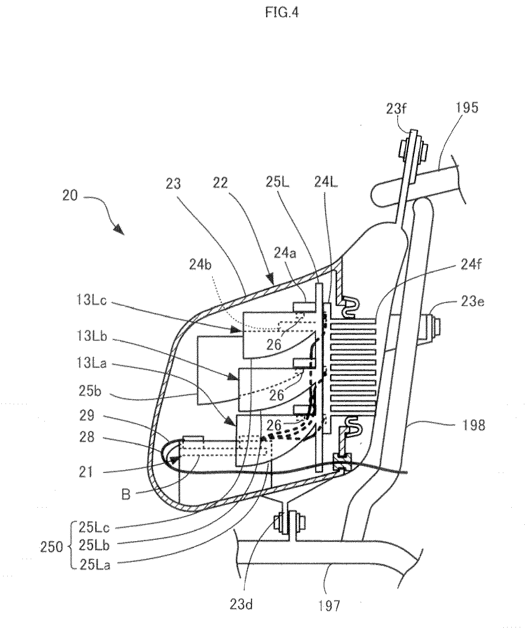

FIG. 3 is a front cross-sectional view showing an outline configuration of the headlight unit 20 shown in FIGS. 1 and 2. FIG. 3 shows, in a front elevational view, a cross-section of the headlight unit 20 being mounted to the motorcycle 10 in an upright state. FIG. 4 is a side cross-sectional view showing an outline configuration of the headlight unit 20.

The headlight unit 20 shown in FIGS. 3 and 4 includes a main headlight 11, a sub headlight 13, and a control device 21. The sub headlight 13 includes a plurality of sub headlight light sources 13La to 13Lc, 13Ra to 13Rc, and a lamp body 22 that supports the plurality of sub headlight light sources 13La to 13Lc, 13Ra to 13Rc. Among the sub headlight light sources 13La to 13Lc, 13Ra to 13Rc, the sub headlight light sources 13La to 13Lc that are arranged in the left part of the motorcycle 10 with respect to the width direction of the vehicle are light sources for illuminating an area ahead and to the left of the motorcycle 10 with respect to the width direction of the vehicle, and the sub headlight light sources 13Ra to 13Rc that are arranged in the right part of the motorcycle 10 with respect to the width direction of the vehicle are light sources for illuminating an area ahead and to the right of the motorcycle 10 with respect to the width direction of the vehicle. In this embodiment, each of the sub headlight light sources 13La to 13Lc, 13Ra to 13Rc is comprised of an LED 26.

The lamp body 22 has a housing 23 that serves as an exterior of the lamp body 22. The housing 23 receives component parts of the headlight unit 20. The housing 23 has fixing portions 23a, 23b, 23c, 23d, 23e, and 23f for fixing the headlight unit 20 to the vehicle body 19 (see FIG. 2) of the motorcycle 10. The fixing portions 23a and 23f provided in an upper portion of the housing 23 are fixed to the upper frame 195. The fixing portions 23c and 23d provided in a lower portion of the housing 23 are fixed to the lower frame 197. The fixing portions 23b and 23e provided in side portions of the housing 23 are fixed to the coupling arm 198 (see FIG. 2). As a result of the fixing portions 23a to 23f being fixed to the vehicle body 19, the lamp body 22 of the headlight unit 20 is fixed to the vehicle body 19 (see FIG. 2).

The lamp body 22 supports the left-hand sub headlight light sources 13La to 13Lc and the right-hand sub headlight light sources 13Ra to 13Rc. The lamp body 22 also supports the high beam light source 11H and the low beam light source 11L of the main headlight 11. In this embodiment, the left-hand sub headlight light sources 13La to 13Lc and the right-hand sub headlight light sources 13Ra to 13Rc are integrally incorporated into the lamp body 22 of the headlight unit 20. In addition, the high beam light source 11H and the low beam light source 11L are also integrally incorporated into the lamp body 22 of the headlight unit 20.

Support members 24L, 24R and reflection members 25L, 25R are provided in the housing 23. The support member 24L and the reflection member 25L in combination are arranged at the left side within the housing 23, and the support member 24R and the reflection member 25R in combination are arranged at the right side within the housing 23. The structure of the support member 24R and the reflection member 25R arranged at the right side and the structure of the support member 24L and the reflection member 25L arranged at the left side are laterally symmetrical, except for the high beam light source 11H and the low beam light source 11L. The support members 24L and 24R are made of, for example, a metal (e.g., aluminum). The reflection members 25L and 25R are made of, for example, a resin. The material of the support members 24L and 24R may not be a metal, and the material of the reflection members 25L and 25R may not be a resin. The reflection member 25L has reflectors 25La to 25Lc each corresponding to each of the sub headlight light sources 13La to 13Lc. The reflection member 25R has reflectors 25Ra to 25Rc each corresponding to each of the sub headlight light sources 13Ra to 13Rc. Each of the reflectors 25La to 25Lc, 25Ra to 25Rc is a curved-surface element that radiates a light beam emitted from each of the sub headlight light sources 13La to 13Lc, 13Ra to 13Rc toward a predetermined direction. The plurality of reflectors 25La to 25Lc, 25Ra to 25Rc constitute a sub headlight illumination part 250 for radiating light beams emitted from the sub headlight light sources 13La to 13Lc, 13Ra to 13Rc toward an area ahead and to the right of the vehicle and an area ahead and to the left of the vehicle with respect to the width direction of the vehicle. The reflection member 25L also has a low beam reflector 25b that radiates a light beam emitted from the low beam light source 11L toward the front side. The reflection member 25R also has a high beam reflector 25c that radiates a light beam emitted from the high beam light source 11H toward the front side.

Each of the support members 24L and 24R includes a mounting portion 24a and a heat dissipation part 24f. The LED 26 is mounted to the mounting portion 24a. The heat dissipation part 24f has a fin-like shape and dissipates heat to the outside. The heat dissipation parts 24f of the support members 24L and 24R are arranged at the back side of the reflection members 25L and 25R. The mounting portion 24a protrudes frontward through the reflection members 25L and 25R. The LEDs 26 mounted to the mounting portions 24a are arranged at positions opposed to the reflectors 25La to 25Lc, 25Ra to 25Rc, respectively. A mounting portion 24b, to which an LED 26 of the low beam light source 11L is mounted, is also integrally provided to the support member 24L. A mounting portion 24c, to which an LED 26 of the high beam light source 11H is mounted, is also integrally provided to the support member 24R.

The sub headlight light sources 13La to 13Lc, 13Ra to 13Rc include: the mounting portions 24a provided to the support members 24L and 24R; the LEDs 26; and the reflectors 25La to 25Lc, 25Ra to 25Rc provided to the reflection members 25L and 25R.

The reflection members 25L and 25R are supported on the support members 24L and 24R, respectively. The support members 24L and 24R are supported on the housing 23 by means of a member such as a screw (not shown). In situations of manufacturing and maintenance operations on the headlight unit 20, the attitude of the support members 24L and 24R relative to the housing 23 may be sometimes adjusted. In situations other than manufacturing and maintenance operations, such as a situation where the motorcycle 10 having the headlight unit 20 mounted thereon is running, the support members 24L and 24R are fixed to the housing 23. That is, the illumination ranges produced by the sub headlight light sources 13La to 13Lc, 13Ra to 13Rc, including optical axes thereof, are fixed, and not moved in accordance with the inclination or lean angle of the motorcycle 10. The reflectors 25La to 25Lc, 25Ra to 25Rc of the sub headlight light sources 13La to 13Lc, 13Ra to 13Rc are also fixed, and not moved in accordance with the lean angle. The headlight unit 20 is a fixed-and-additive-type headlight unit in which the plurality of sub headlight light sources 13La to 13Lc, 13Ra to 13Rc configured to be turned on when the motorcycle 10 is inclined are provided in addition to the main headlight 11. The headlight unit 20 exerts a higher durability than, for example, a unit including a mechanism that moves an optical system in accordance with the lean angle.

In the headlight unit 20, the illumination ranges produced by the sub headlight light sources 13La, 13Lb, and 13Lc are located in order from the center toward the upper left with respect to the width direction of the vehicle. That is, the reflectors 25La, 25Lb, and 25Lc each corresponding to each of the sub headlight light sources 13La, 13Lb, and 13Lc are arranged such that the illumination ranges produced by the sub headlight light sources 13La, 13Lb, and 13Lc are located in order from the center toward the upper left with respect to the width direction of the vehicle. Each of the reflectors 25La, 25Lb, and 25Lc is positioned so as to avoid interference with a light beam emitted from the neighboring sub headlight light source. This also applies to the sub headlight light sources 13Ra, 13Rb, and 13Rc which are arranged at the side opposite to the sub headlight light sources 13La, 13Lb, and 13Lc across the main headlight 11, except for left-right reversal.

The illumination ranges produced by the sub headlight light sources 13La to 13Lc, 13Ra to 13Rc are defined by the shape of each of the reflectors 25La to 25Lc, 25Ra to 25Rc provided to the reflection members 25L and 25R and the orientation of each mounting portion 24a to which the LED 26 is mounted.

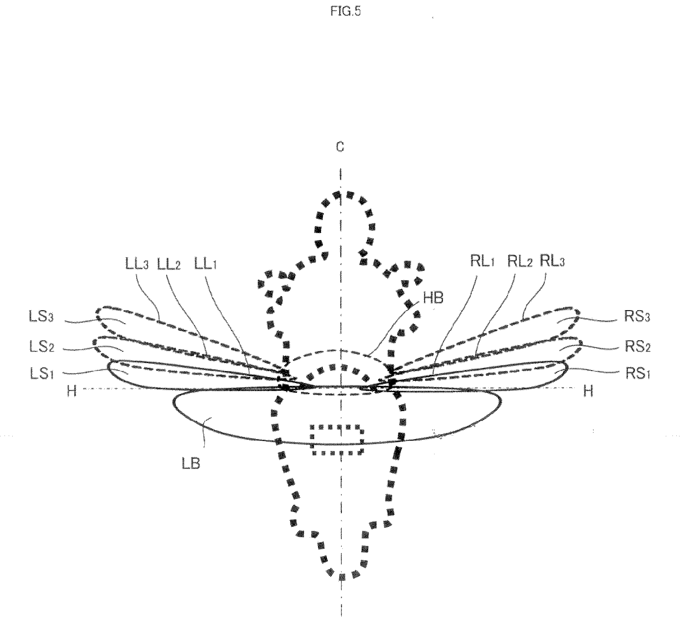

FIG. 5 is a diagram schematically showing illumination ranges and cut-off lines produced by the light sources of the headlight unit 20 shown in FIG. 3. Illumination ranges shown in FIG. 5 are illumination ranges that would be produced if all of the high beam light source 11H and the low beam light source 11L of the main headlight 11 (see FIG. 3) and all of the sub headlight light sources 13La to 13Lc, 13Ra to 13Rc of the sub headlight 13 that are included in the headlight unit 20 mounted to the motorcycle 10 are turned on under a state where the motorcycle 10 (see FIG. 1) is upright. FIG. 5 is a view as seen in a running direction of the motorcycle 10 (seen from the side opposite to the side from which the view of FIG. 3 is seen).

When the motorcycle 10 is upright, an illumination range LB produced by the low beam light source 11L is located below a horizontal line H of the low beam light source 11L. The illumination range LB spreads to both the right and left sides of a center line C with respect to the width direction of the motorcycle 10. The illumination range HB produced by the high beam light source 11H is located above the illumination range LB produced by the low beam light source 11L. Here, the illumination ranges LB and HB have an overlap region.

Illumination ranges LS₁, LS₂, and LS₃ produced by the sub headlight light sources 13La, 13Lb, and 13Lc that illuminate a front area at one side (an area ahead and to the right) of the vehicle with respect to the width direction of the vehicle (see FIG. 3) are located at one side with respect to the width direction of the vehicle (at the left side relative to the center line C). The illumination ranges LS₁, LS₂, and LS₃ are located above the illumination range LB produced by the low beam light source 11L. The height of the illumination range becomes greater in the order of LS₁, LS₂, and LS₃. The location of the illumination range becomes more outward with respect to the width direction of the vehicle in the order of LS₁, LS₂, and LS₃. Neighboring illumination ranges have an overlap region. The location of the illumination ranges RS₁, RS₂, and RS₃ produced by the sub headlight light sources 13Ra to 13Rc, which are arranged at the side opposite to the sub headlight light sources 13La to 13Lc (see FIG. 3) with respect to the width direction of the vehicle, is laterally symmetrical to the location of the illumination ranges LS₁, LS₂, and LS₃ with respect to the center line C. Each of cut-off lines LL₁ to LL₃, RL₁ to RL₃ serves as a boundary line that defines the top of each of the illumination ranges LS₁ to LS₃, RS₁ to RS₃. Each of the illumination ranges LB, HB, LS₁ to LS₃, RS₁ to RS₃ spreads around an optical axis (not shown) produced by each of the light sources 11L, 11H, 13La to 13Lc, 13Ra to 13Rc (see FIG. 3).

In the present teaching, the optical axis is a straight line that passes through a light source and the center of a maximum illuminance portion of emitted light. The center of the maximum illuminance portion of the emitted light can be identified by emitting light from a light source to a screen that is placed ahead of the light source. This screen illuminance test can be implemented by a method specified in JIS D1619. Also, the cut-off line and the illumination range having a predetermined illuminance can be identified based on a result (such as an isolux distribution map) of the screen illuminance test mentioned above.

The control device 21 shown in FIGS. 3 and 4 turns on the sub headlight 13 when the motorcycle 10 is inclined. When the motorcycle 10 is inclined to the right with respect to the width direction of the vehicle, the control device 21 turns on, among the plurality of sub headlight light sources 13La to 13Lc, 13Ra to 13Rc, the sub headlight light sources 13Ra to 13Rc that are configured to illuminate an area ahead and to the right of the vehicle with respect to the width direction of the vehicle. When the vehicle is inclined to the left with respect to the width direction of the vehicle, the control device 21 turns on, among the plurality of sub headlight light sources 13La to 13Lc, 13Ra to 13Rc included in the sub headlight 13, the sub headlight light sources 13La to 13Lc that are configured to illuminate an area ahead and to the left of the vehicle with respect to the width direction of the vehicle.

In this embodiment, the control device 21 is configured as a circuit board B having electronic component parts mounted thereon. The control device 21 is supported on the lamp body 22 of the sub headlight 13. More specifically, in this embodiment, the control device 21 is arranged inside the housing 23 and supported on a board support part 23s provided in the housing 23. The board support part 23s is a rail to which the circuit board B is mounted in a slidable manner. However, the structure of the board support part 23s is not limited to a rail. For example, a column-like member that supports the circuit board B or a spacer that is a member separate from the housing 23 is also adoptable.

Wirings 27La, 27Lb, 27Lc, 27Ra, 27Rb, and 27Rc, each of which is arranged between the control device 21 and each of the sub headlight light sources 13La to 13Lc, 13Ra to 13Rc, supply power from the control device 21 to the sub headlight light sources 13La to 13Lc, 13Ra to 13Rc. Additionally, wiring 27L is arranged between the control device 21 and the low beam light source 11L, and wiring 27H is arranged between the control device 21 and the high beam light source 11H. Unlike a wiring used for data transmission, each of the wirings 27La to 27Lc, 27Ra to 27Rc, 27L, 27H has a thickness that enables a current (power) sufficient for brightly illuminating a road surface to be supplied to the sub headlight light sources 13La to 13Lc, 13Ra to 13Rc, the low beam light source 11L, and the high beam light source 11H.

The control device 21 controls turning-on/turning-off of each of the sub headlight light sources 13La to 13Lc, 13Ra to 13Rc by controlling a current to be supplied to each of the sub headlight light sources 13La to 13Lc, 13Ra to 13Rc of the sub headlight 13. Hereinafter, an electrical configuration concerning the sub headlight 13 including the control device 21 will be described.

FIG. 6 is a block diagram showing a basic electrical configuration concerning the headlight unit 20 of the motorcycle 10.

The headlight unit 20 is provided with the sub headlight light sources 13La to 13Lc, 13Ra to 13Rc, the low beam light source 11L, the high beam light source 11H, and the control device 21. The headlight unit 20 is also provided with a driver 212 that supplies a current to the sub headlight light sources 13La to 13Lc, 13Ra to 13Rc. The driver 212 is a circuit configured to supply a current to the sub headlight light sources 13La to 13Lc, 13Ra to 13Rc under control by a controller 211 of the control device 21. The driver 212 as well as the control device 21 is provided on the circuit board B (see FIG. 3). Thus, the driver 212 is provided integrally with the control device 21, and supported on the lamp body 22 (see FIG. 3). The control device 21 includes the driver 212, the controller 211 that is an computing unit, a driver 213 for the low beam light source 11L and the high beam light source 11H.

The motorcycle 10 also includes a sensor control device 171 which is separate from the control device 21. The sensor control device 171 is an computing unit arranged at a position remote from the headlight unit 20. The sensor control device 171 is, for example, an ECU (Electronic Control Unit) that controls an engine of the motorcycle 10. Here, the sensor control device 171 may be a device that controls an electrical component of the motorcycle 10 other than the engine. The sensor control device 171 has a communication port 171p for transmitting data in the format for digital data transmission. In response thereto, a communication port 211p is provided in the control device 21 of the sub headlight 13. In more detail, the communication port 211p is provided in the controller 211 of the control device 21. The communication port 211p functions as a receiver that receives data in the format for digital data transmission. The sensor control device 171 and the control device 21 are connected to each other by a data communication line 28 corresponding to the digital data transmission. The data communication line 28 is a common signal line shared among a plurality of kinds of data communication. The data communication line 28 is used for communication of data that is applied for the control of turning-on of the plurality of sub headlight light sources 13La to 13Lc, 13Ra to 13Rc. For example, CAN (Controller Area Network) is adopted as a protocol for the digital data transmission. However, a communication protocol other than CAN is also adoptable as the data communication protocol. A power line 29 is also connected between the sensor control device 171 and the control device 21. The power line 29 is a wiring that supplies power from a power source (not shown) provided in the motorcycle 10 to the sensor control device 171 and to the control device 21. In FIG. 6, the line indicating the wiring intended for the power supply is thicker than the line indicating the wiring intended for the data transmission.

In the motorcycle 10, an attitude sensor 172 and a vehicle speed sensor 173 are provided. The attitude sensor 172 and the vehicle speed sensor 173 are directly connected to the sensor control device 171, and not directly connected to the control device 21. In this embodiment, the attitude sensor 172 is a gyro sensor that detects the angular velocity about the front-back axis of the motorcycle 10. The attitude sensor 172 supplies, to the sensor control device 171, a signal indicating the detected angular velocity (roll rate) about the front-back axis. The vehicle speed sensor 173 detects the vehicle speed, and supplies, to the sensor control device 171, a signal indicating the detected vehicle speed. In this embodiment, the sensor control device 171 reads the attitude sensor 172 and the vehicle speed sensor 173 each time a predetermined timing comes during running, to obtain the vehicle speed and the angular velocity about the front-back axis. The sensor control device 171 transmits data of the angular velocity and data of the vehicle speed to the control device 21. The sensor control device 171 may use information read from the attitude sensor 172 and the vehicle speed sensor 173 for the control of a control object of the sensor control device 171, for example, for the control of the engine.

The controller 211 of the control device 21 receives, from the sensor control device 171, the angular velocity data and the vehicle speed data as data to be applied for the control of turning-on of the plurality of sub headlight light sources 13La to 13Lc, 13Ra to 13Rc. The controller 211 of the control device 21 calculates the lean angle of the motorcycle 10 based on the angular velocity data and the vehicle speed data thus received. That is, in this embodiment, the data that the control device 21 uses for the control of turning-on of the plurality of sub headlight light sources 13La to 13Lc, 13Ra to 13Rc is data for calculating the lean angle of the motorcycle 10.

The control device 21 controls turning-on of the sub headlight light sources 13La to 13Lc, 13Ra to 13Rc based on the lean angle of the motorcycle 10 that has been calculated through computation. When the motorcycle 10 is inclined to the right with respect to the width direction of the motorcycle 10, the control device 21 turns on the sub headlight light sources 13Ra to 13Rc that are configured to illuminate an area ahead and to the right of the vehicle. When the motorcycle 10 is inclined to the left with respect to the width direction of the vehicle, the control device 21 turns on the sub headlight light sources 13La to 13Lc that are configured to illuminate an area ahead and to the left of the vehicle. Consequently, the illumination range is increased in the direction to which the motorcycle 10 turns, as compared with a case where the illumination is made only by the low beam light source 11L.

To turn on a certain sub headlight light source, the controller 211 of the control device 21 outputs, to the driver 212, a control signal for supplying a current to the certain sub headlight light source. The driver 212 supplies a current corresponding to the value of the received control signal. As a result, the certain sub headlight light source is turned on.

In this embodiment, the controller 211 of the control device 21 includes a memory (not shown). The memory stores, in the form of data, a plurality of reference values (°) to be compared with the lean angle. Each of the reference values is associated with each of the sub headlight light sources 13La to 13Lc, 13Ra to 13Rc. In this embodiment, the reference value set for the sub headlight light source increases in ascending order of the value associated with the sub headlight light source 13La, the value associated with the sub headlight light source 13Lb, and the value associated with the sub headlight light source 13Lc. The reference value set for the sub headlight light source increases in ascending order of the value associated with the sub headlight light source 13Ra, the value associated with the sub headlight light source 13Rb, and the value associated with the sub headlight light source 13Rc. The illumination ranges LS₁ to LS₃, RS₁ to RS₃ produced by the sub headlight light sources 13La to 13Lc, 13Ra to 13Rc are arranged in such a manner that an illumination range produced by a sub headlight light source associated with a greater reference value is located more outward with respect to the width direction of the motorcycle 10 (see FIG. 5).

When the lean angle obtained by calculation reaches a reference value, the control device 21 turns on a sub headlight light source associated with the reference value. When the motorcycle 10 is inclined to the left, the control device 21 sequentially turns on the sub headlight light sources 13La, 13Lb, and 13Lc along with an increase in the lean angle obtained by calculation. When the motorcycle 10 is inclined to the right, the control device 21 sequentially turns on the sub headlight light sources 13Ra, 13Rb, and 13Rc along with an increase in the lean angle obtained by calculation. Therefore, as the lean angle increases, the illumination ranges LB, LS₁ to LS₃ (see FIG. 5) are widened as compared with the illumination range LB (see FIG. 5) produced by the low beam light source 11L alone.

When turning on any of the plurality of sub headlight light sources 13La to 13Lc, 13Ra to 13Rc, the control device 21 gradually increases the amount of light of the sub headlight light source to be turned on, along with an increase in the lean angle. The control device 21 performs a light control on the sub headlight light sources 13La to 13Lc, 13Ra to 13Rc by means of a PWM (Pulse Width Modulation) control. The controller 211 of the control device 21 transmits, to the driver 212, a control signal having a pulse waveform that represents, in the form of the duty cycle, the amount of light of each of the plurality of sub headlight light sources 13La to 13Lc, 13Ra to 13Rc. The driver 212 supplies, to each of the sub headlight light sources 13La to 13Lc, 13Ra to 13Rc, a current having a pulse waveform that corresponds to the duty cycle of the control signal for the objective sub headlight light source. Thus, a current flowing through the wiring 27La to 27Lc, 27Ra to 27Rc, which is arranged between the control device 21 and each of the sub headlight light sources 13La to 13Lc, 13Ra to 13Rc, has a pulse waveform. A method for the light control is not limited to the PWM control. For example, an analog control in which the current value is continuously varied is also adoptable for the light control.

The control device 21 also includes the driver 213 that supplies a current to the high beam light source 11H and the low beam light source 11L. The beam switch 15B is connected to the driver 213. If the rider operates the beam switch 15B, a signal in accordance with the operation is supplied to the driver 213 which is for the main headlight. The driver 213 for the main headlight switches turning-on/turning-off of the high beam light source 11H and the low beam light source 11L in accordance with the operation performed on the beam switch 15B. The driver 213 for the main headlight does not change the amount of light of the high beam light source 11H and the low beam light source 11L of the main headlight 11. The driver 213 does not control the high beam light source 11H and the low beam light source 11L in accordance with the lean angle.

The flasher switch 15F is connected to the flashers 14L and 14R. If the rider operates the flasher switch 15F, one of the flashers 14L and 14R is caused to flash in accordance with the operation performed on the flasher switch 15F.

Referring to FIG. 3 again, an arrangement of component parts of the headlight unit 20 will be described.

The control device 21, which is configured to turn on any of the sub headlight light sources 13La to 13Lc, 13Ra to 13Rc when the motorcycle 10 is inclined, is supported on the lamp body 22 of the headlight unit 20, and thus integrated with the sub headlight 13.

In the headlight unit 20, the reflectors 25La to 25Lc included in the sub headlight light sources 13La to 13Lc, respectively, are arranged in such a manner that the illumination ranges LS₁ to LS₃ (see FIG. 5) of the sub headlight light sources 13La to 13Lc are laid out sequentially from the center toward the upper left with respect to the width direction of the vehicle. Each of the reflectors 25La to 25Lc is positioned in such a manner that its illumination range does not interfere (not interrupt) a light beam emitted from the sub headlight light source 13La, 13Lb, 13Lc of the neighboring reflector 25La to 25Lc. The same applies to the sub headlight light sources 13Ra to 13Rc.

In the motorcycle 10 shown in FIG. 1, the central portion of the front part of the vehicle body with respect to the width direction of the vehicle protrudes frontward while both side portions thereof located at the right and left sides of the central portion extend obliquely rearward. Such a shape is adopted from the viewpoint of reducing air resistance during running and ensuring balance of the air resistance. Arrangement of component parts follows such a shape.

Meanwhile, in the headlight unit 20 which is a fixed-and-additive-type headlight system provided in the motorcycle 10, the plurality of light sources 13La to 13Lc, 13Ra to 13Rc of the sub headlight 13 that is provided in addition to the main headlight 11 serve a function for widening the illumination range in accordance with an increase in the lean angle of the motorcycle 10. To implement the function, the illumination ranges LS₁ to LS₃, RS₁ to RS₃ (see FIG. 5) of the plurality of light sources 13La to 13Lc, 13Ra to 13Rc are set to orient in different directions (positions). In other words, the light sources 13La to 13Lc, 13Ra to 13Rc emit light beams in different directions.

A light passing space is ensured at the light emission side of each of the light sources 13La to 13Lc, 13Ra to 13Rc. The light passing space is a space for emitted light to pass therethrough in a light emission direction from each of the light sources 13La to 13Lc, 13Ra to 13Rc. The light passing space, which is a space existing around the optical axis, extends along the optical axis in the light emission direction. For example, a space inside each of the reflectors 25La to 25Lc, 25Ra to 25Rc serves as the light passing space. Thus, each of the light sources 13La to 13Lc, 13Ra to 13Rc has a light passing space extending in the light emission direction. Therefore, the light passing spaces of the light sources 13La to 13Lc, 13Ra to 13Rc are formed in the lamp body 22 (within the housing 23), for example. In other words, the light passing spaces of the light sources 13La to 13Lc, 13Ra to 13Rc are formed in, for example, a vehicle body cover (e.g., the front cover 18). That is, in a case where the, for example, the light sources 13La to 13Lc, 13Ra to 13Rc are arranged at the front side in the motorcycle 10 relative to the head pipe, the light passing spaces of the light sources 13La to 13Lc, 13Ra to 13Rc are formed at the front side in the motorcycle 10 relative to the head pipe. The low beam light source 11L has a light passing space. The high beam light source 11H has a light passing space.

The light passing spaces of the sub headlight light sources are shaped such that, when the light sources are turned on in accordance with an increase in the lean angle of the motorcycle, the illumination ranges LS₁ to LS₃, RS₁ to RS₃ (see FIG. 5) of the light sources are produced at positions different from one another. The light passing space of each sub headlight light source is provided so as to, for example, suppress an increase in air resistance thus ensuring running performance while appropriately ensuring the illumination range LS₁ to LS₃, RS₁ to RS₃ (see FIG. 5) of the light source. In the headlight unit 20 which is a fixed-and-additive-type headlight system, a plurality of such light passing spaces of the sub headlight light sources 13La to 13Lc, 13Ra to 13Rc are provided. The light passing spaces of the low beam light source 11L and the high beam light source 11H are also provided. The directions in which the light passing spaces extend (their orientations relative to the illumination ranges LB, HB, LS₁ to LS₃, RS₁ to RS₃ (see FIG. 5)) are different from one another. Each light source is arranged so as to ensure the light passing space of the light source.

Accordingly, each of the plurality of light sources 13La to 13Lc, 13Ra to 13Rc is arranged with a gap formed therearound.

The control device 21 of the headlight unit 20 is supported on the lamp body 22, and this structure makes the control device 21 integrated with the sub headlight 13. This allows the control device 21 to be arranged with effective use of a space that is created as a result of the attempt to achieve both ensuring of a space used for setting optical axes having different directions of the plurality of light sources 13La to 13Lc, 13Ra to 13Rc and arranging of the light sources 13La to 13Lc, 13Ra to 13Rc in the motorcycle 10. Therefore, a space occupied by the entire headlight unit 20 including the control device 21 is reduced as compared with a case where the control device 21 is provided in separately from the headlight unit 20. Moreover, in this embodiment, the control device 21 of the headlight unit 20 is integrated with the sub headlight 13, which can shorten the lengths of the wirings 27La to 27Lc, 27Ra to 27Rc that are arranged so as to extend from the control device 21 to the sub headlight light sources 13La to 13Lc, 13Ra to 13Rc, respectively. For the wirings 27La to 27Lc, 27Ra to 27Rc, a lead wire having a larger diameter than that of the signal line is adopted, in order that a current that enables the sub headlight light sources 13La to 13Lc, 13Ra to 13Rc to brightly illuminate a road surface can flow through the wiring 27La to 27Lc, 27Ra to 27Rc. The arranged wirings 27La to 27Lc, 27Ra to 27Rc correspond to the number of the sub headlight light sources 13La to 13Lc, 13Ra to 13Rc. In the headlight unit 20 of this embodiment, the integration of the control device 21 with the sub headlight 13 allows the wirings 27La to 27Lc, 27Ra to 27Rc to be shortened. Thus, a space for the arrangement of the plurality of large-diameter wirings can be reduced. This achieves downsizing of the entire headlight unit 20 while retaining a high durability and a wide illumination range that are obtainable because the headlight unit 20 is of the fixed-and-additive type in which the sub headlight 13 is provided in addition to the main headlight 11.

The control device 21 is arranged between a right end P and a left end Q of the sub headlight illumination part 250 with respect to the right-left direction in the front elevational view shown in FIG. 3 (when seen from the rider of the motorcycle 10 including the headlight unit 20, right and left are reversed). More specifically, in this embodiment, the control device 21 is arranged on a vertical line C that passes through the center of a region between the right and the left ends of the sub headlight illumination part 250 with respect to the right-left direction in the front elevational view shown in FIG. 3. The sub headlight light sources 13La to 13Lc, 13Ra to 13Rc of the headlight unit 20 emit light beams toward an area ahead and to the right of the vehicle and an area ahead and to the left of the vehicle with respect to the width direction of the vehicle.

The reflectors 25La to 25Lc, 25Ra to 25Rc included in the sub headlight light sources 13La to 13Lc, 13Ra to 13Rc are arranged with inclination relative to the reflectors 25b and 25c of the light sources 11L and 11H of the main headlight 11, in order that the reflectors 25La to 25Lc, 25Ra to 25Rc can illuminate an area ahead and to the left of the motorcycle 10 or an area ahead and to the right of the motorcycle 10. Such an arrangement results in an increased width of the sub headlight illumination part 250 including the reflectors 25La to 25Lc, 25Ra to 25Rc with respect to the right-left direction or the vertical direction, as compared with a case where the reflectors 25La to 25Lc, 25Ra to 25Rc are oriented frontward in the same manner as the main headlight 11 is. In this embodiment, a space created due to this arrangement, which is specific to the fixed-and-additive-type headlight unit, is used for the arrangement of the control device 21.

More specifically, the control device 21 is arranged between the right end P and the left end Q of the sub headlight illumination part 250 with respect to the right-left direction in a front elevational view. This can reduce the entire volume of the headlight unit 20 with effective use of the space, which is specific to the fixed-and-additive-type headlight unit, created between ones of the sub headlight light sources 13La to 13Lc, 13Ra to 13Rc that emit light beams toward an area ahead and to the right of the vehicle and an area ahead and to the left of the vehicle. Preferably, the sub headlight light sources 13La to 13Lc and the sub headlight light sources 13Ra to 13Rc are arranged laterally symmetrically with respect to the width direction of the vehicle, in order that the sub headlight light sources 13La to 13Lc and the sub headlight light sources 13Ra to 13Rc are able to produce the illumination ranges LS₁ to LS₃ and the illumination ranges RS₁ to RS₃ (see FIG. 5) that are located laterally symmetrically with respect to the width direction of the vehicle. Consequently, a relatively large space tends to occur in a central region in a front elevational view. In this respect, the control device 21 is arranged on the vertical line C that passes through the center of the region between the right and left ends of the sub headlight illumination part 250. This enables effective use of the space. Additionally, the total length of the wirings 27La to 27Lc, 27Ra to 27Rc is shortened as compared with the total length of the wirings obtained in a case where, for example, the control device is arranged further to the right of the right end P with respect to the right-left direction in a front elevational view. Accordingly, the entire headlight unit 20 can be downsized with retaining of a high durability and a wide illumination range that are obtainable in a case where the headlight unit 20 is of the fixed-and-additive type in which the sub headlight 13 is provided in addition to the main headlight 11.

The control device 21 is arranged between a lower end S and an upper end T of the sub headlight illumination part 250 with respect to the vertical direction in the front elevational view shown in FIG. 3. This can reduce the entire volume of the headlight unit 20 with effective use of the space, which is specific to the fixed-and-additive-type headlight unit, created between ones of the sub headlight light sources 13La to 13Lc, 13Ra to 13Rc. Additionally, the total length of the wirings 27La to 27Lc, 27Ra to 27Rc extending from the control device 21 can be shortened as compared with the total length of the wirings obtained in a case where, for example, the control device is arranged further below the lower end S. Accordingly, the entire headlight unit 20 can be downsized with retaining of a high durability and a wide illumination range that are obtainable in a case where the headlight unit 20 is of the fixed-and-additive type in which the sub headlight 13 is provided in addition to the main headlight 11.

The driver 212 (see FIG. 6) that supplies a current to the sub headlight light sources 13La to 13Lc, 13Ra to 13Rc each comprised of the LED 26 is supported on the lamp body 22. Since the wirings 27La to 27Lc, 27Ra to 27Rc that supply pulse currents for turning on the LEDs 26 are shortened, noise emission to the outside is reduced. Moreover, since the driver 212 is provided integrally with the control device 21, a space for the arrangement of the driver 212 is reduced, too. Furthermore, the wirings, which are arranged between the driver 212 and the control device 21 and the number of which corresponds to the number of the sub headlight light sources 13La to 13Lc, 13Ra to 13Rc, have a shortened length, which allows printed circuit interconnection to be made by means of patterning on the circuit board B instead of using any lead wire. This achieves further downsizing of the headlight unit 20.

The control device 21 includes the communication port 211p configured to receive data in the format for digital data transmission. The control device 21 receives data used for the control of the plurality of sub headlight light sources 13La to 13Lc, 13Ra to 13Rc via the common communication port 211p. As a result, the number of wirings connected to the control device 21 is reduced. The reduction in the number of connected wirings increases the degree of freedom in arrangement of the control device 21. The control device 21 can be arranged with effective use of a space caused in the lamp body 22. This can further downsize the headlight unit 20.

Since the control device 21 is arranged inside the housing 23, the housing 23 is able to serve for the protection of both the sub headlight 13 and the control device 21. For example, arranging the control device 21 inside the housing 23 eliminates the need of any waterproof cover dedicated for the control device 21.

### <Second Embodiment>

Next, a second embodiment will be described. In the following description of the second embodiment, the same elements as those of the first embodiment are given the same corresponding reference signs or their reference signs are omitted, and differences from the above-described embodiment will be described mainly.

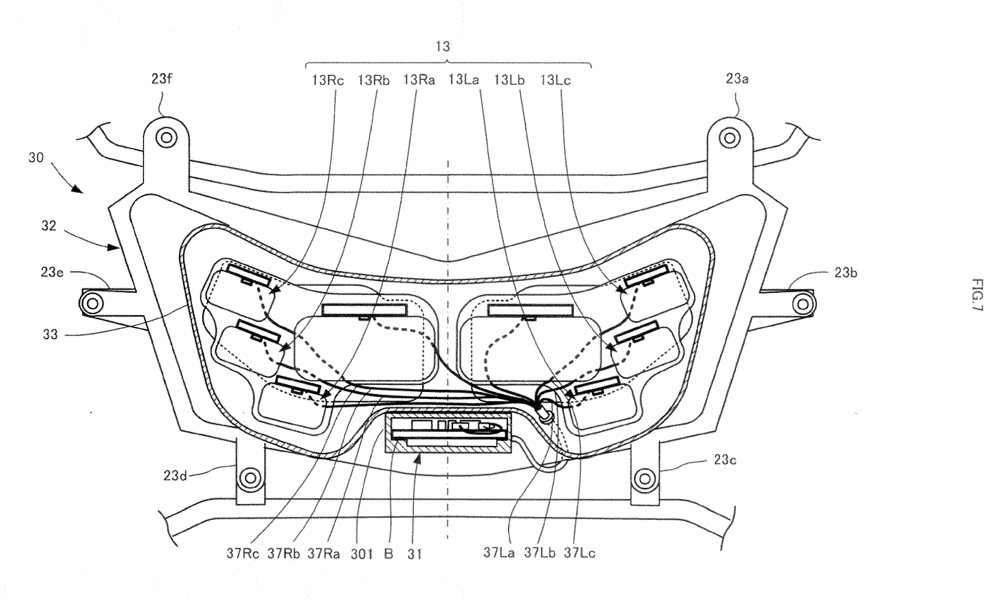

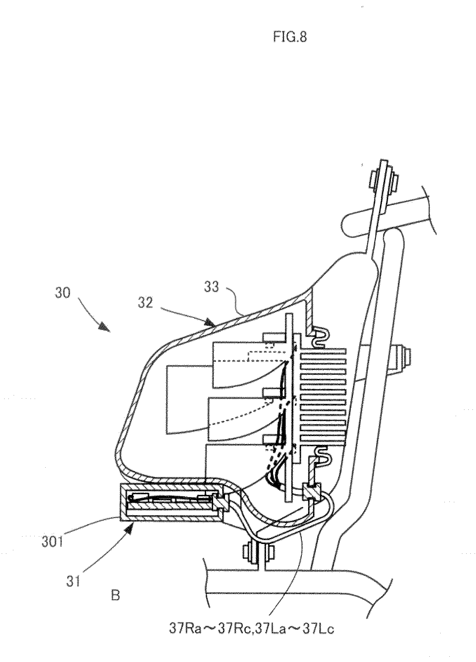

FIG. 7 is a front cross-sectional view showing an outline configuration of a headlight unit according to the second embodiment. FIG. 8 is a side cross-sectional view showing an outline configuration of the headlight unit according to the second embodiment.

In a headlight unit 30 shown in FIGS. 7 and 8, similarly to the headlight unit 20 of the first embodiment, fixing portions 23a to 23f of a housing 33 provided to a lamp body 32 are fixed to the vehicle body 19 so that the lamp body 32 is supported on the vehicle body 19 (see FIG. 2). In the headlight unit 30, similarly to the headlight unit 20 of the first embodiment, a control device 31 is supported on the lamp body 32.

In the headlight unit 30, unlike the headlight unit 20 of the first embodiment, the control device 31 is provided outside the housing 33. A bottom surface of the housing 33 provided to the lamp body 32 of the headlight unit 30 is shaped such that a central portion with respect to the width direction of the vehicle is recessed upward. The control device 31 is arranged on the bottom surface of the housing 33.

The control device 31 includes a control device housing 301 that surround the circuit board B. The control device housing 301 has a waterproof structure for protecting the circuit board B against moisture. The control device housing 301 is fixed to the housing 33 by means of bonding. Here, bonding is not the only way to support the control device 31 on the housing 33. For example, screwing is also adoptable.

Wirings 37La to 37Lc, 37Ra to 37Rc that supply currents from the control device 31 to the sub headlight light sources 13La to 13Lc, 13Ra to 13Rc, respectively, are arranged so as to extend out of the control device housing 301 and then enter the housing 33. Except for the above-described features, the second embodiment is the same as the first embodiment.

In the headlight unit 30 shown in FIGS. 7 and 8, similarly to the headlight unit 20 of the first embodiment, the control device 31 is supported on the lamp body 32. The control device 31 is supported on the lamp body 32 and integrated with the sub headlight 13. Thus, the control device 31 is arranged in a space existing outside the housing 33. This space is created near the sub headlight 13 because of the light distributions of the sub headlight light sources 13La to 13Lc, 13Ra to 13Rc and the restriction on the arrangement in the motorcycle. This results in shortening of the lengths of the wirings 37La to 37Lc, 37Ra to 37Rc extending from the control device 31 to the sub headlight light sources 13La to 13Lc, 13Ra to 13Rc, as compared with a case where, for example, the control device is arranged at a position remote from the lamp body. Therefore, a space for the arrangement of wirings can be reduced, too. Additionally, the control device 31 is provided outside the housing 33. This exerts an effect of, for example, enabling maintenance and inspection operations on the control device 31, including replacement of electronic components such as a controller, to be performed without taking apart the housing 33 of the headlight unit 30. Accordingly, downsizing of the entire headlight unit 30 is achieved with retaining of a high durability and a wide illumination range as well as an improved maintainability.

These embodiments have described a case where the sub headlight light sources 13Ra, 13Rb, and 13Rc are arranged at the side opposite to the sub headlight light sources 13La, 13Lb, and 13Lc across the main headlight 11. However, the present teaching is not limited to this example. In another possible example, the sub headlight of the headlight system of the present teaching may be arranged above or below the main headlight. In still another example, the sub headlight may be arranged between ones of the plurality of light sources included in the main headlight. A plurality of light sources of the sub headlights may line up horizontally or vertically, for example.

These embodiments have described a case where the sub headlight 13 is provided integrally with the main headlight 11. However, the present teaching is not limited to this example. In the present teaching, the sub headlight of the headlight system may be provided separately from the main headlight.

These embodiments have described a case where the left-hand sub headlight light sources 13La to 13Lc and the right-hand sub headlight light sources 13Ra to 13Rc are arranged on the common lamp body 22. However, the present teaching is not limited to this example. In the headlight system of the present teaching, the left-hand sub headlight light source and the right-hand sub headlight light source may be provided separately from each other. In such a case, it suffices that the control device is supported on the lamp body that supports either one of the right-hand and left-hand sub headlight light sources.

These embodiments have described a case where the headlight unit 20 (30) includes six sub headlight light sources 13La to 13Lc, 13Ra to 13Rc. However, the present teaching is not limited to this example. It may be acceptable that two light sources in total, one at the right and the other at the left, are provided in the headlight system of the present teaching.

It may be also acceptable that two light sources are provided at each of the right and left sides in the headlight system of the present teaching. It may be also acceptable that four or more light sources are provided at each of the right and left sides in the headlight system of the present teaching.

These embodiments have described a case where the control device 21 receives, from the sensor control device 171, the angular velocity data and the vehicle speed data serving as the data applied for the control of turning-on of the plurality of sub headlight light sources 13La to 13Lc, 13Ra to 13Rc, to calculate the lean angle of the motorcycle 10. However, the present teaching is not limited thereto. In a possible example, the control device may receive the lean angle serving as the data applied for the control of turning-on of the plurality of sub headlight light sources. In such a case, the sensor control device connected to the control device may calculate the lean angle based on the angular velocity data and the vehicle speed data. Alternatively, the control device may receive data of the value that represents the amount of light or the current of the sub headlight light sources 13La to 13Lc, 13Ra to 13Rc serving as the data applied for the control of turning-on of the plurality of sub headlight light sources 13La to 13Lc, 13Ra to 13Rc. In such a case, the sensor control device obtains, from the calculated lean angle, the data of the value representing the amount of light or the current of each of the plurality of sub headlight light sources 13La to 13Lc, 13Ra to 13Rc, and then transmits the data via the communication port.

These embodiments have described a case where the attitude sensor 172 and the vehicle speed sensor 173 are connected to the sensor control device 171 which is separate from the control device 21. However, the present teaching is not limited to this example. it may be acceptable that, in the headlight system of the present teaching, a sensor is directly connected to the control device so that the control device directly reads out from the sensor information for turning on the light source. The sensor that outputs the information for turning on the light source may be, at least partially, supported on the lamp body.

In these embodiments, the lean angle is the angle of inclination of the vehicle body to the inner side of a curve relative to the upright state (vertical direction). However, the present teaching is not limited to this example. The lean angle may be the angle of inclination of the vehicle body to the inner side of a curve relative to a direction perpendicular to a road surface. As a method and a device for measuring the angle of inclination of the vehicle body to the inner side of a curve relative to the direction perpendicular to the road surface, conventionally known ones are adoptable.

These embodiments have described a case where, when turning on any of the plurality of sub headlight light sources 13La to 13Lc, 13Ra to 13Rc, the control device 21 gradually increases the amount of light of the objective sub headlight light source along with an increase in the lean angle. However, the present teaching is not limited to this example. In the headlight system of the present teaching, the control device may switch the light source between two states of turn-on and turn-off.

These embodiments have described a case where the control device 21 sequentially turns on the sub headlight light sources 13La, 13Lb, and 13Lc along with an increase in the lean angle. However, the present teaching is not limited to this example. In the headlight system of the present teaching; in a case where a plurality of light sources are arranged at one side with respect to the width direction of the vehicle, the control device may turn on the plurality of light sources at one time.

These embodiments have described a case where each of the sub headlight light sources 13La to 13Lc, 13Ra to 13Rc is comprised of the LED 26. However, the present teaching is not limited to this example. In the headlight system of the present teaching, the light source may be a filament bulb, or may be an HID (High Pressure Discharge) bulb. Here, an LED, which has a higher luminous efficacy than a bulb, generates a less amount of heat than the bulb does when emitting the same amount of light. This is why the reflector can be arranged closer to the LED. Therefore, each of the light sources 13La to 13Lc, 13Ra to 13Rc can be downsized. A space created as a result of the downsizing of the light source can be used for the arrangement of the control device.

These embodiments have described a case where the control device 21 is supported on the board support part provided in the housing 23. However, the present teaching is not limited to this example. In the headlight system of the present teaching, for example, the control device may be supported on a frame member that supports the light source or on the heat dissipation part for the light source. The frame member that supports the light source or the heat dissipation part for the light source is included in the lamp body.

These embodiments have described a case where the control device 21 is arranged on the vertical line C that passes through the center of the region between the right and left ends of the sub headlight illumination part 250 with respect to the right-left direction in the front elevational view shown in FIG. 3. However, the present teaching is not limited to this example. In the headlight system of the present teaching, the control device may be arranged at a position shifted from the vertical line C that passes through the center of the region between the right and left ends of the sub headlight illumination part. These embodiments have described a case where the control device 21 is arranged between the right end P and the left end Q of the sub headlight illumination part 250 with respect to the right-left direction in a front elevational view. However, the present teaching is not limited to this example. In the headlight system of the present teaching, for example, the control device may be arranged further to the right of the right end of the sub headlight illumination part.

These embodiments have described a case where the control device 21 is arranged between the lower end S and the upper end T of the sub headlight illumination part 250 with respect to the vertical direction in a front elevational view. However, the present teaching is not limited to this example. In the headlight system of the present teaching, for example, the control device may be arranged further below the lower end of the sub headlight illumination part.

These embodiments describe a case where the sub headlight light source is turned on in accordance with the inclination, that is, the lean angle. However, the present teaching is not limited to this case. The sub headlight light source may be configured such that a turn-on function in accordance with the lean angle is activated or deactivated by hand. To be specific, the function may be put into a stand-by state by hand, and under the stand-by state, the sub headlight light source may be turned on in accordance with the lean angle. In this case as well, the sub headlight light source is turned on not by hand but in accordance with the lean angle. In the flasher, on the other hand, flashing/turning-off is switched by hand. In the main headlight, the direction of illumination is switched by hand. Thus, the sub headlight light source is different from the flasher and the main headlight.

The sub headlight light source may be also configured such that an instruction for turning-on or turning-off is inputted by hand. In such a case, when the instruction is not inputted, the brightness of the sub headlight light source is changed in accordance with the lean angle, while when the instruction is inputted, turning-on or turning-off is performed in accordance with the instruction. For example, when an instruction for turning-on is inputted, the sub headlight light source is turned on irrespective of the lean angle, and when an instruction for turning-off is inputted, the sub headlight light source is turned off irrespective of the lean angle. In this case, a sub headlight system includes an input part (e.g., a switch) to which the instruction for turning-on or turning-off the sub headlight light source is inputted by hand. A control unit is configured to, when the instruction is inputted, turn on or off the sub headlight light source in accordance with the instruction, and when the instruction is not inputted, change the brightness of the sub headlight light source in accordance with the lean angle. In this case as well, the sub headlight light source is different from the flasher and the main headlight, in that a function of turning on the sub headlight light source in accordance with the lean angle is provided.

The sub headlight light source may be configured such that the brightness varies in accordance with the lean angle when the lean angle is equal to or more than a minimum reference value while the brightness is varied by hand when the lean angle is less than the minimum reference value (for example, when the vehicle is running straight). In this case as well, the sub headlight light source has a function for being turned on in accordance with the lean angle, and therefore is different from the flasher and the main headlight.

In the description of these embodiments, the sub headlight light source is turned on in accordance with the lean angle. Here, the sub headlight light source is turned on in accordance with the lean angle because the sub headlight light source functions mainly as a light for ensuring the field of view of the rider of the vehicle. Therefore, in a well-lit situation, for example, in daytime, the sub headlight light source may not necessarily be turned on in accordance with the lean angle.

### [DESCRIPTION OF THE REFERENCE SIGNS]

10 motorcycle
20, 30 headlight unit
11 main headlight
13 sub headlight
13La, 13Lb, 13Lc, 13Ra, 13Rb, 13Rc sub headlight light source
21, 31 control device
22, 32 lamp body
23, 33 housing
23s board support part
24L, 24R support member
25L, 25R reflection member
25Ra to 25Rc, 25La to 25Lc reflector
250 sub headlight illumination part
27La to 27Lc, 27Ra to 27Rc, 37La to 37Lc, 37Ra to 37Rc wiring
211 controller
211p communication port
212 driver

## Claims

1. Aheadlight system for use in a vehicle that leans into turns,
the headlight system comprising:
a main headlight (11) configured to be turned on irrespective of inclination of the vehicle and illuminate an area ahead of the vehicle,
a sub headlight (13) including a plurality of light sources (13La-13Lc, 13Ra-13Rc) and a lamp body (22,32) that supports the light sources (13La-13Lc,13Ra-13Rc), the plurality of light sources (13La-13Lc, 13Ra-13Rc) being configured to be turned on when the vehicle is inclined; and
a control device (21) being configured to, when the vehicle is inclined to the right with respect to a width direction of the vehicle, turn on among the plurality of light sources (13La-13Lc, 13Ra-13Rc) a light source that illuminates an area ahead and to the right of the vehicle with respect to the width direction of the vehicle, and when the vehicle is inclined to the left with respect to the width direction of the vehicle, turn on among the plurality of light sources (13La-13Lc, 13Ra-13Rc) a light source that illuminates an area ahead and to the left of the vehicle with respect to the width direction of the vehicle,
**characterized in that** the control device (21) is supported on the lamp body (22,32) and includes a single reception port as a receiver (211p) that receives data in a format for digital data transmission, the data being used for a control of turning-on of the plurality of light sources (13La-13Lc, 13Ra-13Rc) of the sub headlight (13), wherein the control device (21) is configured to receive digital data from an external device via the single reception port, the external device is different from the control device (21) and mounted in a vehicle part other than the headlight system and configured to receive and process outputs made from a plurality of sensors, to convert the outputs into the format for digital data transmission, and transmit the resultant to the control device (21), wherein each of the plurality of light sources (13La-13Lc,13Ra-13Rc) included in the sub headlight (13) is comprised of an LED,
the headlight system includes a driver circuit (212) that is supported on the lamp body (22,32), the driver circuit (212) being configured to supply a current to the LED in accordance with a control performed by the control device (21), the driver circuit (212) configured to supply a current to the LED in accordance with a control performed by the control device (21) is provided integrally with the control device (21).

2. A headlight system according to claim 1, **characterized in that** the sub headlight (13) includes a sub headlight illumination part (250) that radiates light beams emitted from the plurality of light sources (13La-13Lc, 13Ra-13Rc) toward an area ahead and to the right of the vehicle and an area ahead and to the left of the vehicle with respect to the width direction of the vehicle,
the control device (21) is arranged between a right end and a left end of the sub headlight illumination part (250) with respect to a right-left direction in a front elevational view of the vehicle as viewed from the front side thereof under a state where the headlight system is mounted to the vehicle in an upright state.

3. A headlight system according to claim 2, **characterized in that** the control device (21) is arranged between a lower end and an upper end of the sub headlight illumination part (250) with respect to the vertical direction in the front elevational view.

4. A headlight system according to claim 3, **characterized in that** the control device (21) is arranged on a vertical line that passes through the center of a region between the right and left ends of the sub headlight illumination part (250) with respect to the right-left direction in the front elevational view.

5. A headlight system according to any one of claims 1 to 4, **characterized in that** the control device (21) is arranged inside a housing (23) that serves as an exterior of the lamp body (22) of the sub headlight (13).

6. A headlight system according to any one of claims 1 to 4, **characterized in that** the control device (21) is arranged outside a housing (33) that serves as an exterior of the lamp body (32) of the sub headlight (13).

7. A vehicle that leans into turns, the vehicle including the headlight system according to any one of claims 1 to 6.

## Patentansprüche

1. Ein Scheinwerfer-System zur Verwendung in einem Fahrzeug, das sich in Kurven legt, das Scheinwerfer-System umfasst:
einen Haupt-Scheinwerfer (11), der konfiguriert ist, um angeschaltet zu werden, ungeachtet der Neigung des Fahrzeugs, und beleuchtet einen Bereich vor dem Fahrzeug;
einen Unter-Scheinwerfer (13), der eine Mehrzahl von Licht-Quellen (13La-13Lc, 13Ra-13Rc) und einen Lampen-Körper (22, 32), welcher die Licht-Quellen (13La-13Lc, 13Ra-1Rc) lagert, beinhaltet, die Mehrzahl von Licht-Quellen (13La-13Lc, 13Ra-13Rc) sind konfiguriert, um angeschaltet zu werden, wenn das Fahrzeug geneigt ist; und
eine Steuervorrichtung (21), die konfiguriert ist um, wenn das Fahrzeug nach Rechts mit Bezug auf eine Breiten-Richtung des Fahrzeugs geneigt ist, aus der Mehrzahl von Licht-Quellen (13La-13Lc, 13Ra-13Rc) eine Lichtquelle, welche einen Bereich vor und rechts von dem Fahrzeug mit Bezug auf die Breiten-Richtung des Fahrzeugs ausleuchtet, anzuschalten und wenn das Fahrzeug nach Links mit Bezug auf die Breiten-Richtung des Fahrzeugs geneigt ist, aus der Mehrzahl von Licht-Quellen (13La-13Lc, 13Ra-13Rc) eine Lichtquelle, welche einen Bereich vor und links von dem Fahrzeug mit Bezug auf die Breiten-Richtung des Fahrzeugs ausleuchtet, anzuschalten, **dadurch gekennzeichnet, dass** die Steuervorrichtung (21) an dem Lampen-Körper (22, 32) gelagert ist und einen einzigen Empfangs-Anschluss als einen Empfänger (211p) beinhaltet, welcher Daten in einem Format für digitale Datenübertragung empfängt, die Daten sind für eine Steuerung des Anschaltens der Mehrzahl von Licht-Quellen (13La-13Lc, 13Ra-13Rc) des Unter-Scheinwerfers (13) verwendet, wobei die Steuervorrichtung (21) konfiguriert ist, um digital Daten von einer externen Vorrichtung über den einzelnen Empfangs-Anschluss zu empfangen, die externe Vorrichtung ist unterschiedlich von der Steuervorrichtung (21) und in einem Fahrzeugteil anders als das Scheinwerfer-System montiert und konfiguriert, um Ausgaben, gemacht von einer Mehrzahl von Sensoren, zu empfangen und zu verarbeiten, um die Ausgaben in das Format zur digitalen Datenübertragung zu konvertieren, und das Ergebnis zu der Steuervorrichtung (21) zu übertragen, wobei jede der Mehrzahl von Licht-Quellen (13La-13Lc, 13Ra-13Rc), welche in dem Unter-Scheinwerfer (13) beinhaltet sind, von einer LED umfasst sind,
das Scheinwerfer-System beinhaltet einen Treiber-Schaltkreis (212), der an dem Lampen-Körper (22, 32) gelagert ist, der Treiber-Schaltkreis (212) ist konfiguriert, um einen Strom zu den LED in Übereinstimmung mit einer Steuerung, durchgeführt durch die Steuervorrichtung (21), zuzuführen, der Treiber-Schaltkreis 212, der konfiguriert ist, um eine Strom zu der LED in Übereinstimmung mit einer Steuerung, durchgeführt durch die Steuervorrichtung (21), zuzuführen, integral mit der Steuervorrichtung (21) vorgesehen ist.

2. Ein Scheinwerfer-System gemäß Anspruch 1, **dadurch gekennzeichnet, dass** der Unter-Scheinwerfer (13) einen Unter-Scheinwerfer-Beleuchtungs-Teil (250) hat, welcher Lichtstrahlen, emitiert von der Mehrzahl von Licht-Quellen (13La-13Lc, 13Ra-13Rc), zu einem Bereich vor und nach rechts von dem Fahrzeug und einem Bereich vor und nach links von dem Fahrzeug, mit Bezug auf die Breiten-Richtung des Fahrzeugs, abstrahlt, die Steuervorrichtung (21) ist zwischen einem rechten Ende und einem linken Ende des Unter-Scheinwerfer-Beleuchtungs-Teils (250), mit Bezug auf eine Rechts-Links-Richtung in einer von vorne betrachteten Ansicht des Fahrzeugs, angeordnet, wenn von der Vorder-Seite des Fahrzeugs betrachtet, in einem Zustand in welchem das Scheinwerfer-System an dem Fahrzeug in einem aufrechten Zustand montiert ist.

3. Ein Scheinwerfer-System gemäß Anspruch 2, **dadurch gekennzeichnet, dass** die Steuervorrichtung (21) zwischen einem unteren Ende und einem oberen Ende des Unter-Scheinwerfer-Beleuchtungs-Teils (250), mit Bezug auf die Vertikal-Richtung in der von vorne betrachteten Ansicht, angeordnet ist.

4. Ein Scheinwerfer-System gemäß Anspruch 3, **dadurch gekennzeichnet, dass** die Steuervorrichtung (21) auf einer Vertikal-Linie angeordnet ist, welche durch die Mitte eines Bereichs zwischen dem rechten und linken Enden des Unter-Scheinwerfer-Beleuchtungs-Teils (250), mit Bezug auf die Rechts-Links-Richtung in der von vorne betrachteten Ansicht, angeordnet ist.

5. Ein Scheinwerfer-System gemäß irgendeinem der Ansprüche 1 bis 4, **dadurch gekennzeichnet, dass** die Steuervorrichtung (21) innerhalb eines Gehäuses (23) angeordnet ist, welches als ein Äußeres des Lampen-Körpers (22) des Unter-Scheinwerfers (13) dient.

6. Ein Scheinwerfer-System gemäß irgendeinem der Ansprüche 1 bis 4, **dadurch gekennzeichnet, dass** die Steuervorrichtung (21) außerhalb eines Gehäuses (33) angeordnet ist, welches als ein äußeres des Lampen-Körpers (32) des Unter-Scheinwerfers (13) dient.

7. Ein Fahrzeug, das sich in Kurven neigt, das Fahrzeug beinhaltet das Scheinwerfer-System gemäß irgendeinem der Ansprüche 1 bis 6.

## Revendications

1. Système de bloc optique destiné à une utilisation dans un véhicule qui penche dans les virages,
le système de bloc optique comprenant :
un bloc optique principal (11) configuré pour être mis en service indépendamment de l'inclinaison du véhicule et qui illumine une zone située en avant du véhicule,
un bloc optique auxiliaire (13) incluant une pluralité de sources de lumière (13La à 13Lc, 13Ra à 13Rc) et un corps de lampe (22, 32) qui supporte les sources de lumière (13La à 13Lc, 13Ra à 13Rc), la pluralité de sources de lumière (13La à 13Lc, 13Ra à 13Rc) étant configurées pour être allumées lorsque le véhicule est incliné, et
un dispositif de commande (21) configuré, lorsque le véhicule est incliné vers la droite par rapport à la direction de la largeur du véhicule, pour allumer, parmi la pluralité de sources de lumière (13La à 13Lc, 13Ra à 13Rc), une source de lumière qui éclaire une zone en avant et à la droite du véhicule par rapport à la direction de la largeur du véhicule, et lorsque le véhicule est incliné vers la gauche par rapport à la direction de la largeur du véhicule, pour allumer, parmi la pluralité de sources de lumière (13La à 13Lc, 13Ra à 13Rc), une source de lumière qui éclaire une zone en avant et à la gauche du véhicule par rapport à la direction de la largeur du véhicule,
**caractérisé en ce que** le dispositif de commande (21) est supporté sur le corps de lampe (22, 32) et inclut un port unique de réception en tant que récepteur (211p) qui reçoit des données dans un format destiné à une transmission de données numériques, les données étant utilisées pour la commande d'allumage de la pluralité de sources de lumière (13La à 13Lc, 13Ra à 13Rc) du bloc optique auxiliaire (13), le dispositif de commande (21) étant configuré pour recevoir des données numériques provenant d'un dispositif extérieur par l'intermédiaire du port unique de réception, le dispositif extérieur étant différent du dispositif de commande (21) et monté dans une partie du véhicule différente du système de bloc optique et configurée pour recevoir et traiter des sorties provenant d'une pluralité de capteurs, pour convertir les sorties dans le format destiné à une transmission de données numériques et pour transmettre le résultat au dispositif de commande (21), dans lequel chacune de la pluralité de sources de lumière (13La à 13Lc, 13Ra à 13Rc) incluse dans le bloc optique auxiliaire (13) est constituée d'une diode LED,
le système de bloc optique inclut un circuit d'attaque (212) qui est supporté sur le corps de lampe (22, 32), le circuit d'attaque (212) étant configuré pour délivrer un courant à la diode LED en fonction d'une commande effectuée par le dispositif de commande (21), le circuit d'attaque (212) configuré pour délivrer un courant à la diode LED en fonction d'une commande effectuée par le dispositif de commande (21), est réalisé d'un seul tenant avec le dispositif de commande (21).

2. Système de bloc optique selon la revendication 1, **caractérisé en ce que** le bloc optique auxiliaire (13) inclut un organe d'éclairage de bloc optique auxiliaire (250) qui émet le faisceau lumineux émis de la pluralité de sources de lumière (13La à 13Lc, 13Ra à 13Rc) vers une zone en avant et à la droite du véhicule et une zone en avant et à la gauche du véhicule par rapport à la direction de la largeur du véhicule,
le dispositif de commande (21) est agencé entre l'extrémité droite et l'extrémité gauche de l'organe d'éclairage de bloc optique auxiliaire (250) dans une vue en élévation avant du véhicule telle qu'on peut le voir depuis son côté avant dans un état tel que le système de bloc optique est monté pour être droit sur le véhicule.

3. Système de bloc optique selon la revendication 2, **caractérisé en ce que** le dispositif de commande (21) est agencé entre une extrémité inférieure et une extrémité supérieure de l'organe d'éclairage de bloc optique auxiliaire (250) par rapport à la direction verticale dans la vue en élévation avant.

4. Système de bloc optique selon la revendication 3, **caractérisé en ce que** le dispositif de commande (21) est agencé sur une ligne verticale qui traverse le centre d'une zone située entre les extrémités gauche et droite de l'organe d'éclairage de bloc optique auxiliaire (250) par rapport à la direction droite-gauche dans la vue en élévation avant.

5. Système de bloc optique selon l'une quelconque des revendications 1 à 4, **caractérisé en ce que** le dispositif de commande (21) est agencé à l'intérieur d'une enveloppe (23) qui sert de partie extérieure au corps de lampe (22, 32) du bloc optique auxiliaire (13).

6. Système de bloc optique selon l'une quelconque des revendications 1 à 4, **caractérisé en ce que** le dispositif de commande (21) est agencé à l'extérieur d'une enveloppe (33) qui sert de partie extérieure au corps de lampe (22, 32) du bloc optique auxiliaire (13).

7. Véhicule penchant dans les virages, le véhicule incluant le système de bloc optique conforme à l'une quelconque des revendications 1 à 6.
